# EUROPEAN PATENT APPLICATION

(11) **EP 3 627 015 A1**
(43) Date of publication of application: **25.03.2020**
(21) Application number: 18195630.1
(22) Date of filing: 20.09.2018
(51) Int. Cl.: F16K 1/52, F16K 27/02, G05D 16/06, F16K 41/04, F24D 19/10

(54) **METHOD OF OPERATING A VALVE WITH A DYNAMIC UNIT**

(71) Applicant: Danfoss A/S, 6430 Nordborg (DK)
(72) Inventor: HØLCK, Poul, 6430 Nordborg (DK); MARKVART, Arne, 6430 Nordborg (DK)
(74) Representative: Petersen, Frank

(57) **Abstract**

A method of operating a valve (10) is described. The valve comprises a valve element (20) movable relative to a valve seat (28) to adjust a valve opening (30) to regulate a fluid flow between a first and a second fluid port (16, 18). The valve further comprises reversing means to reverse a flow though the valve opening. The said valve further comprises a dynamic unit (100) to regulate a dynamic flow opening (102) in dependence on a pressure difference between the first and the second fluid port. In a first flow direction of the flow through the dynamic unit, the dynamic flow opening is reduced if the pressure difference increases. In a second, opposite flow direction of the flow through the dynamic unit, the dynamic flow opening is increased or kept constant if the pressure difference increases. The dynamic unit is arranged such that the reversing means also reverse a flow through the dynamic unit. In order to facilitate installation, the method includes operating the valve with a flow direction such that a flow through the dynamic unit is directed in the second flow direction.

## Description

The invention relates to a method of operating a valve. In particular, the method relates to operating a valve which comprises a dynamic unit to regulate a dynamic flow opening in dependence on a pressure difference.

EP 3 193 050 A1 describes a valve, in particular a heat exchanger valve. A housing has a first and a second port. A flow path between the ports is provided. Valve means are located in the flow path, including a valve element and a valve seat. Reversing means are provided to reverse a flow direction through the valve seat. A dynamic unit is arranged in the flow path to keep a pressure drop over the valve means constant.

Valves, for example of the above described type, may be provided with a dynamic unit to reduce a dependency of the regulating function on the dynamic pressure. In a valve without a dynamic function, the flow of heating/cooling fluid through the valve is not only dependent on the valve opening, but also on the dynamic pressure. A dynamic unit aims to equalize the pressure drop over the valve, so that the dependency of the flow of heating/cooling fluid on the dynamic pressure is reduced.

It may be considered an object to propose an operating method facilitating installation of a valve and of a fluid flow system including one or more valves, e.g. a heating/cooling system.

The object may be addressed by a method according to claim 1. Dependent claims refer to preferred embodiments.

The valve used in the method according to the invention comprises a valve element and a valve seat serving a basic valve regulating function. The valve element is movable relative to the valve seat to adjust a valve opening to regulate a fluid flow between a first and a second fluid port. The valve may be connected via the fluid ports e.g. to a cooling or heating system. The fluid flow within the valve between the fluid ports may be regulated by adjusting the valve opening, which is effected by positioning the valve element relative to the valve seat. The valve opening may be adjusted by changing the distance between the valve element and the valve seat. In particular, it is preferred to provide the valve element linearly movable relative to the valve seat.

According to the invention, the valve further comprises reversing means arranged to reverse a flow through the valve opening. This should be understood in the context of a constant flow direction between the fluid ports, e.g. from the first to the second fluid port. The reversing means may preferably switch the connection of the valve seat to the first and second fluid ports, so that despite the same flow direction between the ports the flow direction through the valve opening is reversed. The reversing means may thus allow to install the valve regardless of flow direction and later choose a desired flow direction by using the reversing means.

The valve used in the method according to the invention further comprises a dynamic unit. The dynamic unit is disposed to regulate a dynamic flow opening dependent on a pressure difference of the fluid between the first and second port. Preferably, the dynamic flow opening is provided in series with the valve opening, such that the flow through the valve passes both openings in succession.

The dynamic unit operates differently depending on the flow direction. In a first flow direction of the flow through the dynamic unit, the dynamic flow opening is reduced if the pressure difference increases. This may be referred to as a counteracting regulating function, because by reducing the dynamic flow opening, the effect of an increased pressure difference, namely to increase the fluid flow, is counteracted. In a second, opposite flow direction of the flow through the dynamic unit, the dynamic flow opening is increased or kept constant if the pressure difference increases.

Thus, the counteracting regulating function of the dynamic unit, which serves to equalize the pressure difference, is present only in the first flow direction. Only in the first flow direction does the dynamic unit counter the effect of an enlarged pressure difference by narrowing the dynamic flow opening, limiting the amount of fluid passing through the dynamic flow opening. In contrast, for a flow in the second flow direction, the dynamic unit does not counteract, but the dynamic flow opening is kept constant or may e.g. even be increased in response to an increased pressure difference, thereby allowing more fluid to pass the greater the pressure difference is. There may be a limit to the size the dynamic flow opening, such that in the second flow direction the dynamic flow opening may be increased up to a maximum size, such that it will not be further enlarged if a higher pressure difference is applied.

The dynamic unit is arranged within the valve such that the reversing means also reverse the flow through the said dynamic unit. Thus, the reversing means may be used to choose not only the flow direction through the valve opening, but also through the dynamic unit.

The method according to the invention includes operating the valve with a flow direction such that the flow through the dynamic unit is directed in the second flow direction.

Thus, according to the inventive method, the valve is operated such that the dynamic unit does not fulfil a counteracting regulating function to counter the effect of an enlarged pressure difference. It should be noted that previously valves including a dynamic unit have only been used such that the dynamic unit is effective in fulfilling its counteracting function. The present inventors have determined, however, that this may have disadvantages in some cases. If a valve with a dynamic unit is installed, some modes of operation may be negatively influenced or even prevented. For example, if the valve (possibly together with a conduit and/or system it is connected to) should be flushed, e.g. after installation or service, an enlarged flush pressure applied may cause the dynamic unit to strongly reduce the dynamic flow opening and thereby prevent effective flushing. Also, if a pressure e.g. in an inlet port should be measured, the counteracting regulating function of the dynamic unit may change the results, distorting measurements.

According to the invention, the reversing means may be used to choose a flow direction through the valve to thereby deactivate the counteracting regulating function of the dynamic unit. By using the reversing means to direct the flow through the dynamic unit of the valve in the second flow direction, it is possible, for example, to flush the valve with a high pressure unhindered by the dynamic unit. Also, a dynamic pressure at the inlet port, e.g. a pump pressure, may be measured in the valve without distortion of the measurements caused by the counteracting regulating function of the dynamic unit.

Preferably, the dynamic flow opening may be arranged within the valve such that in the first flow direction, in which the counteracting regulating function of the dynamic unit is effective, the flow through the valve opening is directed in an opening direction of the valve. This is understood to mean that the fluid flowing through the valve opening is directed such that it first contacts the valve seat before contacting the valve element. Further preferred, the dynamic flow opening is arranged within the valve such that in the second flow direction, in which the counteracting regulating function of the dynamic unit is not effective, the flow through the valve opening is directed in a closing direction of the valve. This is understood to mean that the fluid flowing through the valve opening is directed such that it first contacts the valve element before contacting the valve seat. It should be noted that it is generally recommend to operate valves such that the flow through the valve opening is directed in opening direction. In the preferred embodiment, however, the valve may be operated with a flow directed in the opposite closing direction of the valve.

Operation of a valve according to the invention is particularly advantageous if not only one valve, but multiple valves connected to each other, for example in parallel, e.g. in a heating or cooling system, are operated accordingly. For example, for two or more valves, each include reversing means and a dynamic unit with a function as described, it is preferred to operate all in the second flow direction, i.e. such that the counteracting regulating function of the dynamic unit is not effective.

As mentioned above, it may be preferred to flush a valve or a system including multiple connected valves. To achieve effective flushing, the valves are arranged such that the fluid flow through their respective dynamic units is directed in the second flow direction, i.e. the counteracting regulating function is not effective. A fluid is then pumped through the valve or valves with a high pressure. For example, in a heating system a regular (dynamic) operating pressure will be in the order of 100 - 200 kPa. Flushing may be effected with an increased dynamic pressure of e.g. 300 kPa or above, preferably 400 kPa or higher.

As further mentioned, the valve and/or a system it is installed in may be operated to sense a pressure. A pressure sensor may be arranged within the valve or connected to the valve. A pressure of a fluid flowing through the valve may thus be measured. Preferably, the pressure sensor may be provided at or connected to the valve opening.

In a preferred embodiment, the reversing means may comprise a rotatable valve insert. The valve insert may comprise a first and a second connecting opening for the fluid. The insert may be arranged movable at least between a first and a second position. In the first position, the first connecting opening may be arranged in a flow path between the first fluid port and the valve seat. In the second position, the second connecting opening may be arranged in a flow path between the first fluid port and the valve seat. By rotating the valve insert between the first and second positions, the connection between the first and second openings of the valve insert and the first and second fluid ports may thus be switched, effecting the reversing function.

The valve seat and the valve element are preferably arranged within the rotatable valve insert. Further preferred, also the dynamic unit may be arranged within the rotatable valve insert. In this way, a connection between the dynamic flow opening and the valve opening may be maintained within the rotatable valve insert.

In a preferred embodiment, the dynamic unit may comprise a dynamic piston movable to regulate the dynamic flow opening. The dynamic piston may be connected, preferably fixed, to a membrane. The membrane may be arranged such that a first and an opposite second side thereof are connected to different fluid ports. Depending on a pressure difference between the fluid ports, the membrane may therefore be elastically deflected, thereby moving the connected dynamic piston accordingly. A spring may be arranged to provide a spring force additionally acting on the dynamic piston. Preferably, the membrane may be arranged between the spring and the dynamic piston.

Preferred embodiments of the invention will now be described with reference to the drawings, wherein
- Fig. 1: shows a perspective view of an embodiment of a valve and a reversing tool;
- Fig. 2: shows a side view of the valve and reversing tool of Fig. 1;
- Fig. 3: shows a side view of the valve of Fig. 1, 2 partly exploded;
- Fig. 4a: shows a sectional view along A..A in Fig. 1;
- Fig. 4b: shows the sectional view of Fig. 4a with a valve insert rotated;
- Fig. 5: shows an exploded sectional view of the valve of figures 1-4b
- Fig. 6: shows a sectional view of a dynamic unit;
- Fig. 7: shows a perspective exploded view of elements of the dynamic unit of Fig. 6;
- Fig. 8a, 8b, 8c: show different positions of selected parts of the valve;
- Fig. 9: shows a sectional view of the valve with a connected measurement device;
- Fig. 10a - c: show schematical drawings of a heating system with different settings of the valves.

The figures show a valve 10 including a valve insert 14 inserted in a valve housing 12 with a first fluid port 16 and second fluid port 18.

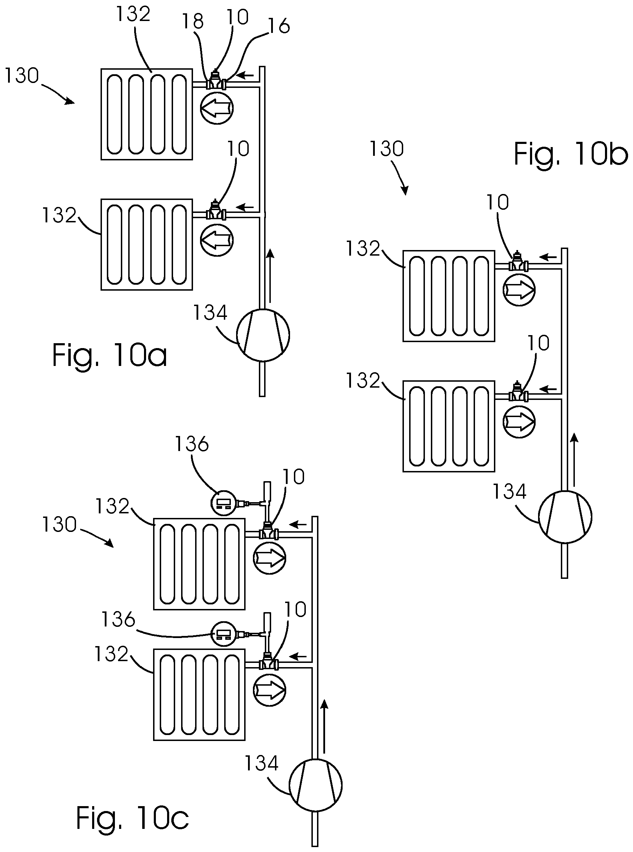

The depicted embodiment of a valve 10 is the lower half of a thermostat valve which controls the flow of heating fluid between a first and second fluid port 16, 18 dependent on the axial movement of a valve pin 24 along a longitudinal axis X. For example in a heating system 130 as schematically shown in Fig. 10a, the valve 10 may be connected with its fluid ports 16, 18 between a source of heating fluid, e.g. a pump 134, and a radiator 132 or floor heating system (not shown). In use of the valve 10, a thermostat (not shown) may be mounted on top of the valve 10. The thermostat may determine a desired amount of heating fluid to pass thorough the valve 10. To regulate the fluid flow between the fluid ports 16, 18, the thermostat axially moves the valve pin 24. The thermostat thus sets the axial position of the valve pin 24 according to a desired heat flow, depending on the current room temperature in relation to a selected heating setting.

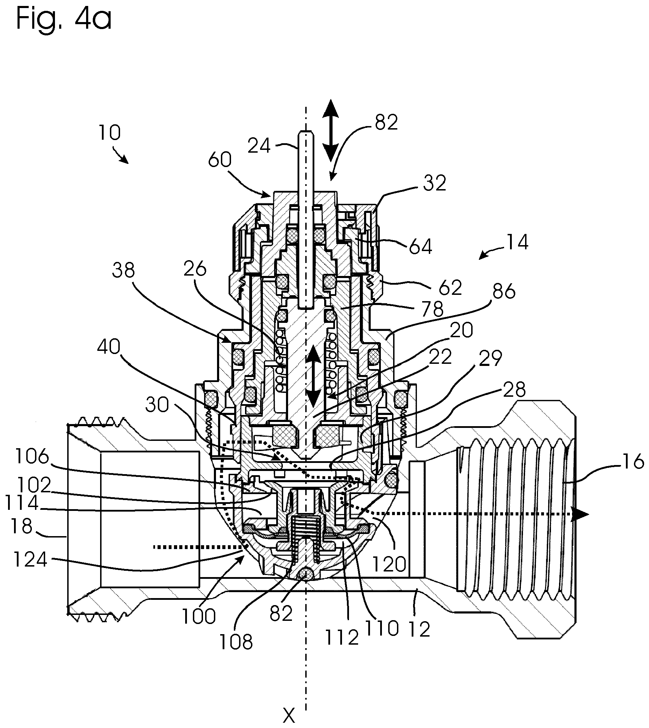

As visible from the sectional view of Fig. 4a, the valve pin 24 abuts against a valve element 20 (valve stem 22). The valve pin 24 may depress the valve stem 22 in closing direction of the valve 10 downward along the longitudinal axis X against the action of a valve spring 26. The valve stem 22 is thus movable in longitudinal direction X relative to a valve seat 28 provided as an opening in a valve seat ring 29. The free cross-section of a valve opening 30 formed between the end of the valve stem 22 and the valve seat 28 is thus regulated by longitudinal movement of the valve stem 22. As shown as a dotted line in Fig. 4a, fluid from the second fluid port 18 may pass through the valve opening 30 to the first fluid port 16.

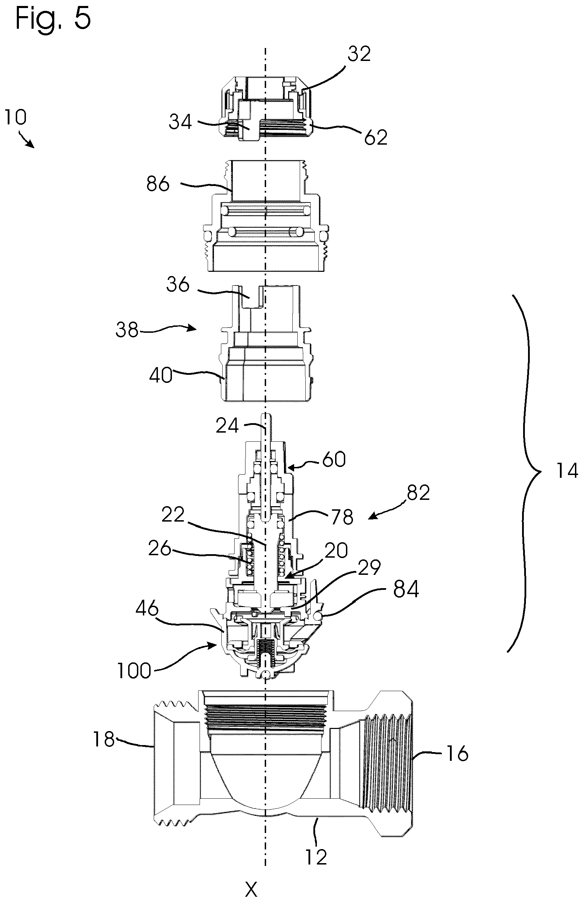

Fig. 5 shows in an exploded, sectional view the valve housing 12, the valve insert 14 and a valve top 86.

The valve insert 14 includes a central portion 82 and a presetting element 38. The valve top 86 covers the valve insert 14 and fixes it to the valve housing 12 by a screw connection. A handle 32 it mounted on top of the valve top 86.

The valve housing 12 and valve top 86 are made of metal, preferably brass. Further, the valve spring 26 and a nut 62 axially fixing the handle 38 are made of metal. The remaining parts of the valve insert 14 are made of a plastic material and may be formed by injection molding.

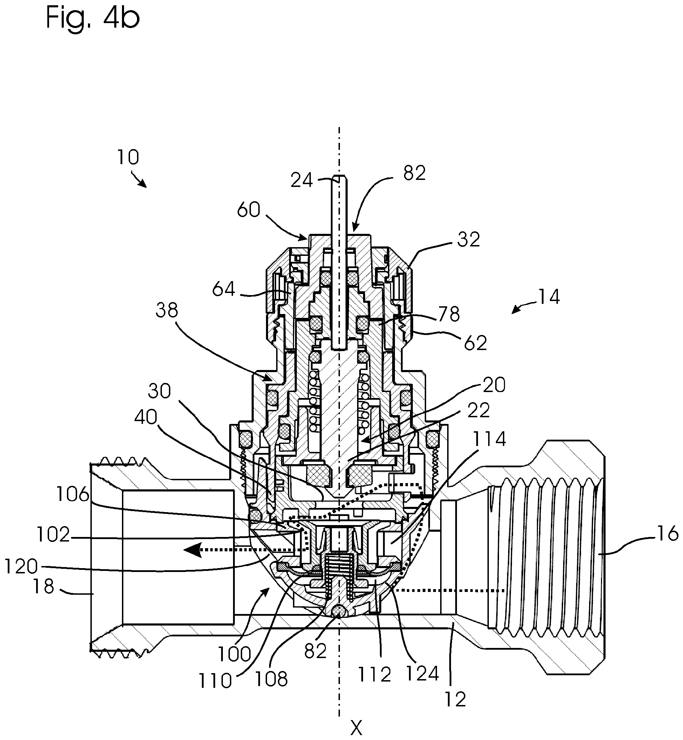

As visible in particular from Fig. 5, the central portion 82 comprises a lower part 46 of the valve, including a revolver seal 84 and a dynamic unit 100, which will be further explained below. The revolver seal 84 is arranged to seal the valve insert 14 against the valve housing 12. In Fig. 5, the revolver seal 84 is shown facing the first fluid port 16. As will be explained below, the valve insert 14 is rotatable by 180° around the central longitudinal axis X to reverse the flow direction through the valve 10, such that the revolver seal 84 is then facing the second fluid port 18 as shown in Fig 4b.

The central portion 82 of the valve 10 further comprises the valve seat ring 29 and the valve element 20 with the valve spring 26 as described above. The valve element 20 is axially movable within a valve sleeve 78, which is also part of the central portion 82. Further, a stuffing box 60 provided to slidingly mount the valve pin 24 forms part of the central portion 82.

The above described elements of the central portion 82 are all arranged rotationally fixed to each other. While they remain separate parts and are still separable - e.g. the stuffing box 60 with the valve pin 24 is axially held by the nut 62 screwed onto the valve top 86 - the stuffing box 60, valve sleeve 78, valve seat ring 29, and lower part 46 are interlocked with each other such that they cannot be rotated relative to each other around the longitudinal axis X.

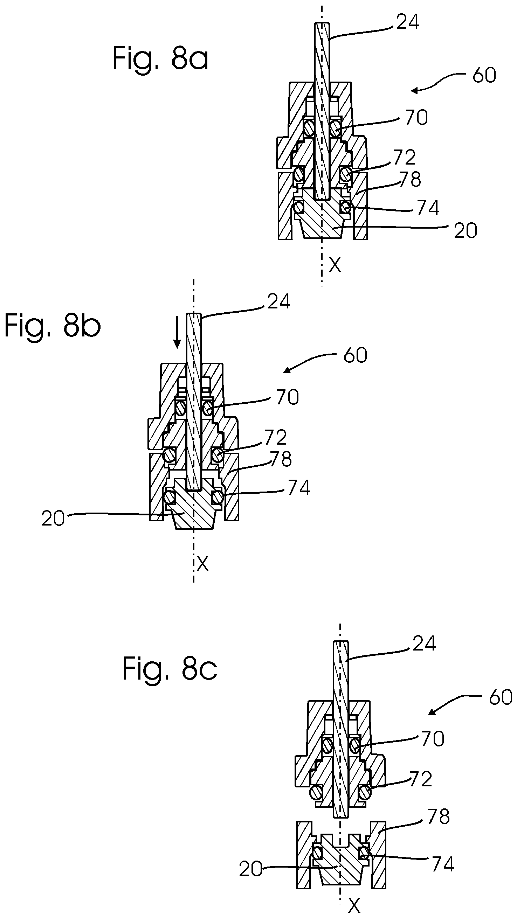

Fig. 8a, 8b show how - in a simplified, partly schematic representation of only some of the elements - the valve stem 20 is positioned via the valve pin 24. Fig. 8a shows the valve stem 20 in its upper stop position, where it abuts against the stuffing box 60. It should be noted that in this position the inner, fluid conducting portion of the valve 10 is in contact with the stuffing box 60 and sealing against the outside of the valve 10 is effected by an outer seal 72 of the stuffing box 60. The valve pin 24 is sealed by an inner seal 70 of the stuffing box 60. While there is a seal 74 provided on the valve stem 20, this seal 74 is not effective in the upper stop position shown because it is still arranged at a (small) distance to the inner wall of the valve sleeve 78.

Fig. 8b shows how the valve stem 20 is displaced in closing direction along the longitudinal axis X by movement of the valve pin 24.

The stuffing box 60 is exchangeable within the valve 10. As visible from Fig. 4a, 8a, 8b, it is mounted such that is partly surrounded by the valve sleeve 78 and the connection sealed by its outer seal 72. In the position shown, the valve stem 22 abuts against the stuffing box 60 from below, urged by the spring 26. From above, the stuffing box 60 is fixed in place by the nut 62, which acts as an axial stop for a holding ring 64 fixing the stuffing box 60.

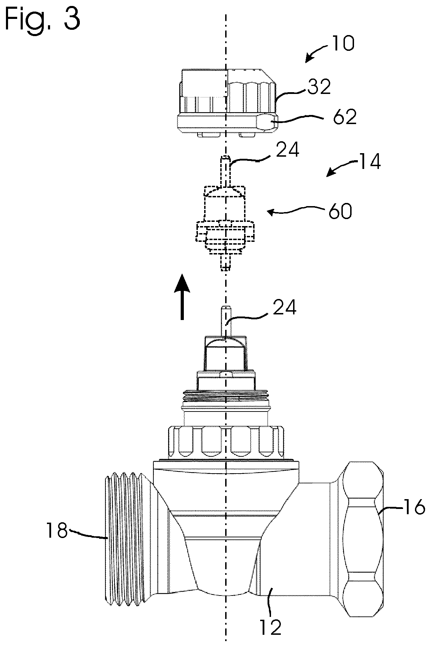

The stuffing box 60 is thus positioned and held within the valve 10 between the holding ring 64 above and the valve sleeve 78 and valve stem 20 below. The stuffing box 60 may be exchanged by unscrewing the nut 62. By removing the nut 62, the holding ring 64 is released, which allows to take off both the holding ring 64 and the handle 32, such that the stuffing box 60 is also free to be removed (Fig. 3).

If the stuffing box 60 is removed, the valve stem 20 can move beyond the upper stop position shown in Fig. 8a (defined by abutting against the stuffing box 60) and is urged by the spring 26 to enter a sealing position shown in Fig. 8c. In the sealing position of the valve stem 20, the seal 74 provided thereon forms a tight seal with the valve sleeve 78, thereby sealing the inner fluid conducting portion of the valve 10 against the outside. Thus, a seal is maintained even if the stuffing box 60 is removed.

The valve 10 comprises a presetting function by which a selectable flow resistance for the flow path connecting the first and second ports 16, 18 may be chosen, independently of the state of the valve opening 30. The ring-shaped handle 32 may be manually rotated around the longitudinal axis X. The handle 32 is rotationally coupled via a finger 34 (Fig. 5) and cutout 36 to a presetting element 38 including a presetting sleeve 40 arranged to surround the valve stem 22 and the valve seat ring 29.

The presetting element 38 is rotatable around the longitudinal axis X. The presetting sleeve 40 comprises a radial flow opening (not shown), and the valve seat ring 29 comprises a radial flow channel opening (not shown). By relative rotational positioning of the presetting element 38 relative to the valve seat ring 29, the flow opening and flow channel opening can be brought into different overlap positions, thereby selecting the size of the effective cross-section available for the fluid flow.

While the radial flow opening in the presetting sleeve 40 and the corresponding radial flow channel opening in the valve seat ring 29 are not shown, Fig. 4a shows schematically the flow through the valve 10 from the second fluid port 18 as inlet port to the first fluid port 16 as outlet port. As shown there, the flow enters into the valve insert 14 through a second opening 124, traverses the corresponding flow opening/flow channel openings (not shown) in presetting sleeve 40 and valve seat ring 29, then the valve opening 30 defined by the valve seat 28 and the valve stem 22, and then a dynamic flow opening 102 of the dynamic unit 100. The regulating function of the presetting element 38 therefore affects the flow in series to the regulating function of the valve opening 30, and to the dynamic valve opening 102.

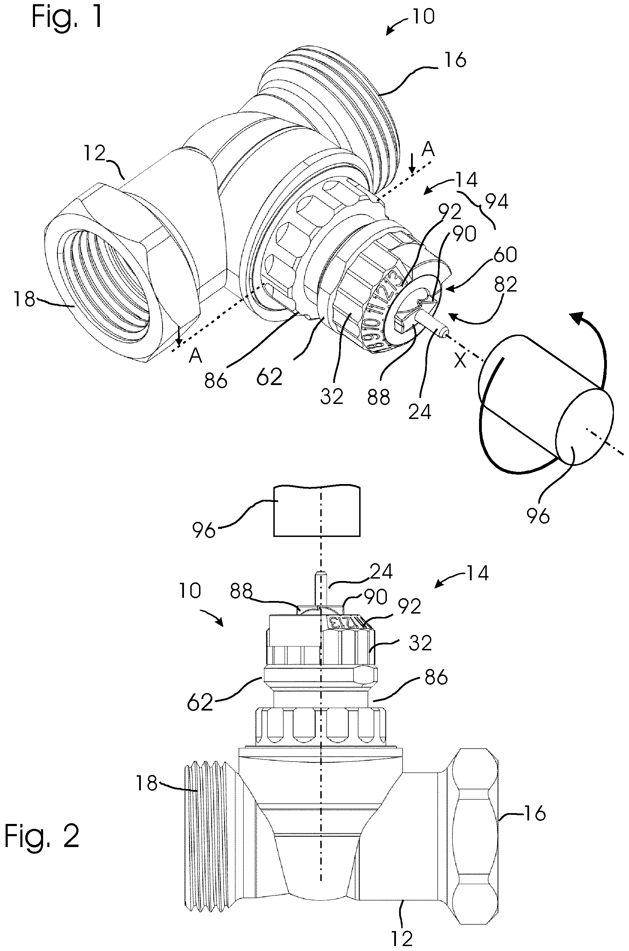

Presetting is thus effected by choosing a suitable rotation position of the presetting element 38 by means of the handle 32. As the presetting element is rotated, the central portion 82 remains stationary. The handle 32 is ring-shaped and surrounds an upper part of the central portion 82. A presetting indicator 94 (Fig. 1) is provided comprising a presetting position marker 90 and a presetting position scale 92. The presetting position marker 90 is shaped as the tip of an arrow and provided on the stuffing box 60, which is part of the central portion 82. The presetting position scale 92 is provided on the outer surface of the handle 32 and comprises numbers serving as marks for different presetting positions spaced at equal distances around the central portion 82.

As the presetting element 38 and handle 32 are rotated relative to the central portion 82 to adjust the presetting, the presetting position marker 90 points to different marks of the presetting position scale 92, thereby indicating the chosen presetting position.

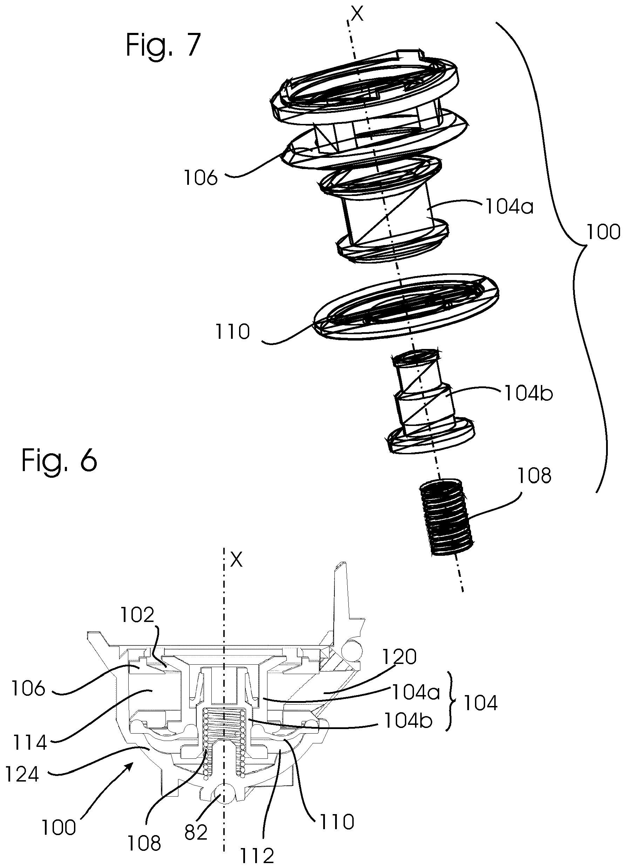

The dynamic unit 100 located in the lower part 46 of the valve insert 14 providing a regulating function dependent on a pressure difference is shown in more detail in Fig. 6, 7. It comprises a dynamic piston 104 consisting of an upper portion 104a and a lower portion 104b linearly movable along the longitudinal axis X. The dynamic piston 104 is fixed to a flexible membrane 110. A spring 108 is provided to bias the dynamic piston 104 in upward direction.

The dynamic piston 104 is movable relative to a ring 106, such that the dynamic flow opening 102 formed between them may be regulated. The cross section of the dynamic flow opening 102 is dependent on the position of the dynamic piston 104 relative to the ring 106.

The membrane 110 is arranged between a first, lower chamber 112 to one side and a second, upper chamber 114 for the fluid flow to the other side. As the membrane 110 is flexible, it will bend depending on a pressure difference between the fluid in the first and second chambers 112, 114. If the pressure in the first chamber 112 is higher than the pressure in the second chamber 114, the membrane 110 will be deflected upwards, thereby urging the dynamic piston 104 into the same direction, increasing the dynamic flow opening. If the pressure in the first chamber 112 is lower than the pressure in the second chamber 114, the membrane 110 will be deflected downwards, thereby retracting the dynamic piston 104, reducing the dynamic flow opening 102 against the force of the spring 108.

The first chamber 112 located below the membrane 110 is connected to an opening 124 of the valve insert 14 which in Fig. 4a and Fig. 6 is oriented to the left, i.e. connected to the second fluid port 18. The second chamber 114 located above the membrane 110 is connected to an opening 120 of the valve insert 14, which in Fig. 4a, 6 is oriented to the right, connected to the first fluid port 16.

If the flow direction through the valve 10 is such that the opening 120 leading to the second chamber 114 is connected to the inlet port, i.e. to the port with the higher pressure, and the opening 124 leading to the first chamber 112 is connected to the outlet port, i.e. the port with lower pressure, there will be a pressure difference between the first and second chambers 112, 114 causing the membrane 110 to be deflected downwards, closing the dynamic flow opening 102. The larger the pressure difference is, the further the dynamic flow opening 102 will be closed. Thus, in the described flow direction the dynamic unit 100 counteracts the larger pressure difference, limiting the flow through the valve more strongly for a larger pressure difference and allowing a larger flow if the pressure difference is less.

In the opposite flow direction, i.e. if the opening 120 and second chamber 114 are connected to the lower pressure and the opening 124 and first chamber 112 to the higher pressure, the spring 108 and an upward deflection of the membrane 110 will both act on the dynamic piston 104 to move upwards and open the dynamic flow opening 102. Due to the spring 108 and the membrane 110 acting in the same direction, even a small pressure difference will suffice to open the dynamic flow opening 102 fully.

The flow direction through the valve insert 14 is dependent on the flow direction between the fluid ports 16, 18 and on a rotation direction of the valve insert 14. The valve insert 14 may be rotated around the longitudinal axis X to reverse the fluid flow through the valve insert 14 and thereby through the valve opening 30 and through the dynamic valve opening 102.

While the valve 10 is shown in figure 4a in a position where the first opening 120 of the valve insert 14 is connected to the first fluid port 16 and the second opening 124 of the valve insert 14 is connected to the second fluid port 18, Fig. 4b shows the valve 10 with the valve insert 14 rotated 180° around the longitudinal axis X, so that the connection of the first and second fluid ports 16, 18 to the first and second openings 120, 124 of the valve insert 14 is reversed.

As shown in the drawings, in particular Fig. 4, 4b, 6, the dynamic unit 100 is arranged upright within the valve insert 14, i.e. in parallel to the longitudinal axis X and not at an angle to it. The dynamic piston 104 is movable along the axis X. The membrane 110 extends essentially perpendicular to the axis X.

Rotation of the valve insert 14 may be effected by rotating the central portion 82, the top of which protrudes from the valve 10 as visible in particular from Fig. 1. On top of the stuffing box 60, a coupling element 88 is provided which allows rotational coupling to a reversing tool 96. The reversing tool 96 is provided with an engagement structure (not shown) shaped as a negative of the coupling element 88, such that it engages the top of the central portion 82 and couples thereto. By turning the reversing tool, e.g. by means of a handle of the reversing tool 96 (not shown), the central portion 82 is rotated together with the presetting element 38, while the valve housing 12 and the valve top 86 remain stationary.

A flow of fluid through the valve 10 is possible in both directions between the first and second fluid ports 16, 18. As explained above, the flow direction through the valve opening 30 depends both on the flow direction between the fluid ports 16, 18 and on the rotation position of the valve insert 14. In Fig. 4a, 4b, the flow is shown as a dotted line to pass through the valve opening 30 in downward direction, i.e. in the closing direction of the valve stem 22 relative to the valve seat 29. For operation of a heating system it is generally preferred to choose the opposite flow direction, i.e. such that the fluid flow through the valve opening 30 is directed in opening direction of the valve, i.e. upwards in Fig. 4a, 4b. Considerations regarding operating the valve 10 with different flow directions will be given below.

The coupling element 88 provided on top of the central portion 82 has the shape of an arrow. As already explained, the tip of the arrow is used as presetting position marker 90. In addition, the arrow servers a further purpose in that it points in a specific direction between the first and second fluid ports 16, 18, namely the flow direction which ensures that the fluid flowing through the valve 10 will traverse the valve opening 30 in the direction corresponding to the opening direction of the valve 10. If the flow direction is reversed by rotating the valve insert 14 as explained above, the arrow will indicate the reverse flow direction.

Fig. 4b shows, also as a dotted line, the fluid flow through the valve 10 which compared to Fig. 4a is reversed both with respect to the flow direction between the fluid ports 16, 18 and to the rotation direction of the valve insert 14. In the reversed configuration shown in Fig. 4b, the first fluid port 16 is connected as an inlet and second fluid port 18 as an outlet. However, due to the valve insert 14 being rotated as compared to the position shown in Fig. 4a, the flow direction through the valve insert 14 and in particular through the valve opening 30 is the same as before, i.e. the fluid flow is directed in closing direction of the valve stem 22.

Fig. 10a schematically shows the arrangement of the valves 10 connected in parallel to the pump 134 of the heating system 130. The arrow shown below the valves 10 corresponds to the shape of the coupling element 88 which also indicates the rotation position of the valve insert 14 as explained above.

The setting of heating system 130 as shown in Fig. 10a corresponds to a normal mode of operation, i.e. the flow of heating fluid supplied by pump 134 is fed to radiators 132 regulated by the valves 10. For this normal heating operating, the reversible valve inserts 14 of both of the valves 10 are set as indicated in parallel to the flow direction. As described above, this leads to a flow through the valve inserts 14 of the valves 10 reverse to what is shown in Fig. 4a, 4b, i.e. traversing the valve opening 30 in opening direction of the valve 10. This flow direction through the valves 10 is preferred for the normal operation because possible effects caused if the flow moves the valve stem 22 can be avoided. Also, in this flow direction the dynamic units 100 of the valves 10 provide a counteracting regulating function, i.e. the flow through the valves 10 is regulated depending on the pressure difference between inlet and outlet to counteract the effect of increased pressure.

In Fig 10b the heating system 130 is shown with a different setting of the valves 10. Compared to Fig. 10a showing usual operation, the valves 10 shown in Fig. 10b are reversed, i.e. their valve inserts 14 rotated 180° as described above. This is indicated by the arrow of the coupling element 88, which indicates a reversed direction counter to the actual flow direction through the valves 10.

In the setting and mode of operation shown in Fig. 10b, the flow direction through the valves 10 corresponds to the flow shown as dotted lines in Fig. 4a, 4b, i.e. the flow through the valve opening 30 is directed in closing direction of the valve. Also, in this flow direction the dynamic units 100 of both valves 10 do not provide the counteracting regulating function, but in fact increase the size of the dynamic flow opening 102 up to the maximum opening if the pressure difference increases.

The mode of operation shown in Fig. 10b may be used for flushing the heating system 130. A high flushing pressure is applied by the pump 134 to press a high volume of fluid through the system 130, thereby flushing any contamination or debris out of the conduits, valves 10 and radiators 132. Since the setting of the valves 10 ensures that the dynamic units 100 do not provide the counteracting regulating function, the fluid under the increased pressure may pass through the valves 10 (provided that the valve opening 30 and the presetting are opened). If the increased flushing pressure were applied to the system 130 with a setting as in Fig. 10a, the dynamic units 100 would react by closing the dynamic flow opening 102, which would lead to a high flow resistance such that flushing could not effectively be done.

Fig. 10c shows the heating system 130 while a pressure measurement is made. Pressure measuring devices 136 are connected to the valves 10.

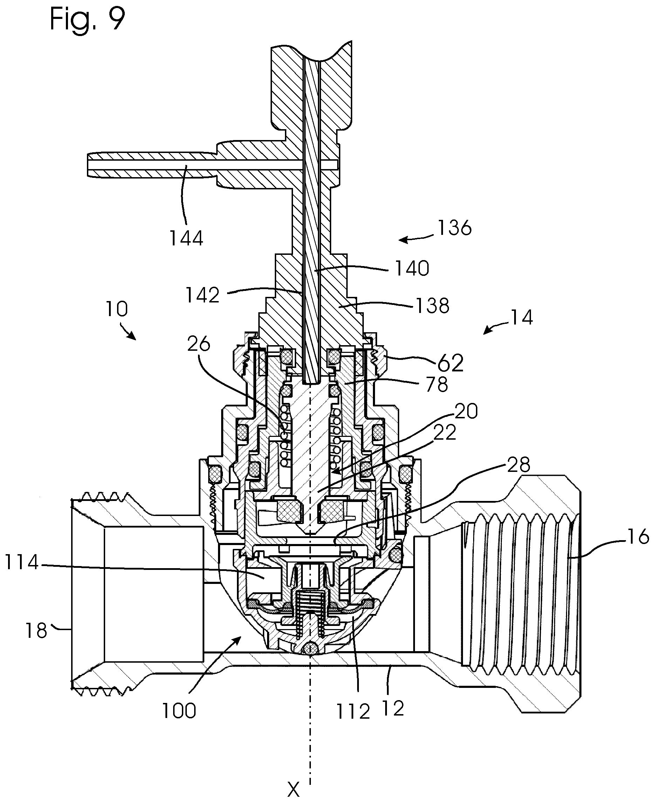

Fig. 9 shows how a pressure measuring device 136 may be connected to the valve 10 by removing the stuffing box 60 as described above and fitting a measuring head 138 in its place by the nut 62. A device pin 140 takes the place of the valve pin 24 and serves to position the valve stem 22. The measuring head 138 comprises a channel 142 surrounding the device pin 140 connected to a measuring conduit 144 leading to a pressure sensor (not shown).

The pressure sensor is thus connected to the inside of the valve insert 14 and can measure the pressure therein. As the valve 10 is connected with its fluid ports 16, 18 to the heating system 130 as shown in Fig. 10c, the pressure sensor may sense the pressure applied at one of the fluid ports 16, 18 connected to the inside of the valve insert 14 via the first and second openings 120, 124. In particular, the pressure supplied by the pump 134 may thus be measured by the measuring device 136.

To avoid a distortion of the measurement by the dynamic unit 100, the valves 10 in the heating system 130 are set as shown in Fig. 10c. The resulting flow direction through the dynamic units 100 is such that the counteracting regulating function is not active. On the contrary, the pump pressure will fully open the dynamic flow opening 102 up to the maximum, such that it may be measured without a distortion of measurements by the dynamic unit 100.

## Claims

1. Method of operating a valve,
- said valve comprising a valve element (20) movable relative to a valve seat (28) to adjust a valve opening (30) to regulate a fluid flow between a first and a second fluid port (16,18),
- said valve (10) further comprising reversing means to reverse a flow though said valve opening (30),
- said valve (10) further comprising a dynamic unit (100) to regulate a dynamic flow opening (102) in dependence on a pressure difference between said first and said second fluid port (16, 18), wherein in a first flow direction of said flow through said dynamic unit (100) said dynamic flow opening (102) is reduced if the pressure difference increases, and in a second, opposite flow direction of said flow through said dynamic unit (100) said dynamic flow opening (102) is increased or kept constant if the pressure difference increases,
- said dynamic unit (100) being arranged such that said reversing means also reverse a flow through said dynamic unit (100),
- said method including operating said valve (10) with a flow direction such that a flow through said dynamic unit (100) is directed in said second flow direction.

2. Method according to claim 1, wherein
- said valve (10) is a first valve, and at least a second valve (10) is coupled to said first or said second fluid port (16, 18),
- wherein said second valve (10) also comprises a valve element (20), valve seat (28), reversing means and a dynamic unit (100),
- wherein also said second valve is operated with a flow direction such that a flow through said dynamic unit (100) is directed in said second flow direction.

3. Method according to one of the above claims, wherein
- a fluid is pumped through said valve (10) in said flow direction with a high pressure to flush said valve (10).

4. Method according to one of the above claims, wherein
- a pressure of a fluid flowing through said valve (10) is sensed by a pressure sensor (136) arranged within or connected to said valve (10).

5. Method according to one of the above claims, wherein
- in the first flow direction the flow through the valve opening (30) is directed in an opening direction of the valve (10),
- and in the second flow direction the flow through the valve opening (30) is directed in a closing direction of the valve (10).

6. Method according to one of the above claims, wherein
- said reversing means comprise a rotatable valve insert (14) comprising a first and a second connecting opening (120,124),
- said insert (14) being movable at least between a first position, where said first opening (120) is arranged in a flow path between said first fluid port (16) and said valve seat (28), and a second position, where said second opening (124) is arranged in a flow path between said first fluid port (16) and said valve seat (28).

7. Method according to claim 6, wherein
- said dynamic unit (100) is arranged within said rotatable valve insert (14).

8. Method according to one of the above claims, wherein
- a dynamic piston (104) is movable to regulate said dynamic flow opening (102), said dynamic piston (104) being connected to a membrane (110),
- wherein a first side of said membrane (110) is connected to one of the first and second fluid ports (16,18), and a second, opposite side of said membrane (110) is connected to the other of the first and second fluid ports (16, 18).

9. Method according to claim 8, wherein
- a spring (108) is arranged to act on said dynamic piston (104), said membrane (110) being arranged between said spring (108) and said dynamic piston (104). (16390.6 PA16674)
